# EUROPEAN PATENT APPLICATION

(11) **EP 2 503 230 A1**
(43) Date of publication of application: **26.09.2012**
(21) Application number: 11159101.2
(22) Date of filing: 22.03.2011
(51) Int. Cl.: F21V 7/16, F21Y 101/02

(54) **A led lighting device with an adjustable spatial distribution of the emitted light**

(71) Applicant: Solvay Specialty Polymers Italy S.p.A., 20021 Bollate (MI) (IT); Universita Degli Studi di Padova, 35131 Padova (IT); Consiglio Nazionale Delle Ricerche, 00185 Roma (IT)
(72) Inventor: Bonora, Stefano, 35123, PADOVA (IT); Zanoni, Enrico, 35123, PADOVA (IT); Meneghini, Matteo, 35011, Campodarsego (IT); Brusatin, Giovanna, 31033, Castelfranco Veneto (IT); Marrani, Alessio, 23900, LECCO (IT); Bassi, Mattia, 21146, MILANO (IT); Falco, Ivan, 20018, SEDRIANO (IT)
(74) Representative: Benvenuti, Federica

(57) **Abstract**

The present invention relates to a lighting device (1) that comprises a first light source (2) comprising one or more LED devices (21).

At least a deformable reflective element (3) is optically coupled to said first light source, so as to receive light from said first light source, said reflective structure comprising at least a first portion (31) having a reflective surface (310) that reflects at least partially the light (L1) received from said first light source, and a second portion (32) that is solidly coupled to said first portion.

Driving means (4) are operatively coupled to said second portion (32), which induce a deformation of said second portion that in turn causes a deformation of the reflective surface (310) of said first portion.

The position of the focus point (F) of the light (L2) reflected by said reflective surface can thus be varied in a controlled manner.

## Description

The present invention relates to a LED lighting device.

Nowadays, LED (Light Emitting Diode) devices are widely employed as light sources, since they generally ensure higher efficiency and longer lifetime with respect to traditional light sources, such as incandescent lights.

LED lighting devices are known, in which it is possible to adjust the spatial distribution of the light emitted by a LED light source.

In some devices, a parabolic reflector is operatively associated with the LED light source.

The position of the LED light source can be adjusted with respect to the parabolic reflector in order to collect and direct the LED light according to the needs.

An inconvenient of these LED lighting devices resides in that a considerable portion of the LED light is not received by the parabolic reflector, since the LED light source has an emission angle relatively wide. The intensity of the LED light focused by the parabolic reflector is thus generally relatively poor.

Also LED lighting devices have been developed, in which lens systems are adopted to focus the light emitted by a LED light source.

Patent application nr. US2008/0068833, for example, discloses a flashlight, in which a positive lens is operatively associated with a LED light source.

The positive lens is mounted on a sleeve, the position of which can be mechanically adjusted with respect to the position of the LED light source in order to focus the emitted light towards a target.

In general, these devices have a relatively cumbersome structure.

A further drawback consists in that a mechanical control of the LED light focusing operation is used. The practice has shown that this may bring to malfunctions due, for example, to wear and obsolescence of the involved mechanical parts.

Further, a relatively narrow field of variation of the LED light distribution is allowed.

Patent application nr. PCT/CH2009/000009 discloses a light scrambler, in which an optical lens is displaced by exploiting the planar deformation of a polymeric film. The polymeric film is electrically connected with two electrodes and it mechanically deforms upon the application of a voltage difference between the electrodes.

Lighting devices of this kind ensure improved performances in terms of uniformity of the distribution of the light emitted by a LED source.

Unfortunately, the devices currently available are still structurally complicated and expensive to realize at industrial level, particularly when a massive production is required.

Therefore, the main aim of the present invention is to provide a LED lighting device, which allows the overcoming of the drawbacks mentioned above.

Within this aim, it is an object of the present invention to provide a LED lighting device, which ensures high performances in controlling the spatial distribution of the light emitted by a LED light source.

A further object of the present invention is to provide a LED lighting device, which is reliable in operation and has a very compact structure.

It is also an object of the present invention to provide a LED lighting device, which is easy to manufacture at industrial level, at competitive costs.

Thus, the present invention provides a lighting device, according to the following claim 1.

In its more general definition, the lighting device, according to the invention, comprises at least a first light source that comprises one or more LED devices.

The lighting device comprises also at least a deformable reflective element that is optically coupled to the first light source, so as to receive light from it.

Said reflective structure comprises at least a first portion having a reflective surface that reflects at least partially the light received from the first light source and at least a second portion that is solidly coupled to the first portion.

Driving means are operatively associated with the second portion to induce a controlled structural deformation of the second portion, which in turn causes a deformation of the reflective surface of the first portion, so that the spatial distribution, in particular the position of the focus point, of the light reflected by said reflective surface is varied in a controlled manner.

The lighting device, according to the invention, is thus capable of providing a light beam that can be easily directed through the space, according to the needs, for example focused on a selected target.

Further, the spatial distribution of the light emitted by the LED light source is controlled without relative movements of parts. High reliability in focus adjustment operations can thus be achieved and a wide range of variation of the spatial distribution parameters of the light emitted by the LED light source is exploitable, which ensures a high level of flexibility in use.

The lighting device, according to the invention, has a very compact structure that is easy to manufacture at industrial level, at competitive costs.

Further features and advantages of the lighting device, according to the present invention, will become apparent from the following description of preferred embodiments, taken in conjunction with the drawings, in which :
- Fig. 1 represents a schematic diagram of the lighting device, according to the present invention;
- Fig. 2 represents a schematic diagram of a deformable reflective element of the lighting device, according to the present invention, in a first embodiment ;
- Fig. 3 represents a schematic diagram of a deformable reflective element of the lighting device, according to the present invention, in another embodiment ;
- Fig. 4 represents a schematic diagram of a deformable reflective element of the lighting device, according to the present invention, in a further embodiment ;
- Fig. 5 represents a schematic diagram of a deformable reflective element of the lighting device, according to the present invention, in a further embodiment ;
- Fig. 6 represents a schematic diagram of a deformable reflective element of the lighting device, according to the present invention, in a further embodiment ;
- Fig. 7 represents a schematic diagram of an example of the lighting device, according to the present invention ;
- Fig. 8 represents a diagram representing some laboratory measurements taken in the lighting device of Fig. 7.

Referring now to the cited figures, the present invention relates to a lighting device 1 that is provided with at least a first light source 2 comprising one or more LED devices 21.

Preferably, the light source 2 comprises a collimator element 22 that can be, for example, a lens or a reflector, e.g. a parabolic reflector.

However, other embodiments of the present invention (not shown) may not foresee such a collimator element.

The light source 2 is optically coupled to at least a deformable reflective element 3, which receives light L1 from the light source 2.

The reflective element 3, which may be, for example, a deformable mirror or lens, comprises at least a reflective surface 310 that reflects at least partially the light L1 received from the first light source 2.

The rest shape of the reflective surface 310 may be flat, as shown in the cited figures, or curved, for example concave or convex with respect to a reference extension plane.

The reflective element 3 may be positioned so that the direction of propagation D1 of the light L1 is normal or quasi-normal with respect to reflective surface 310.

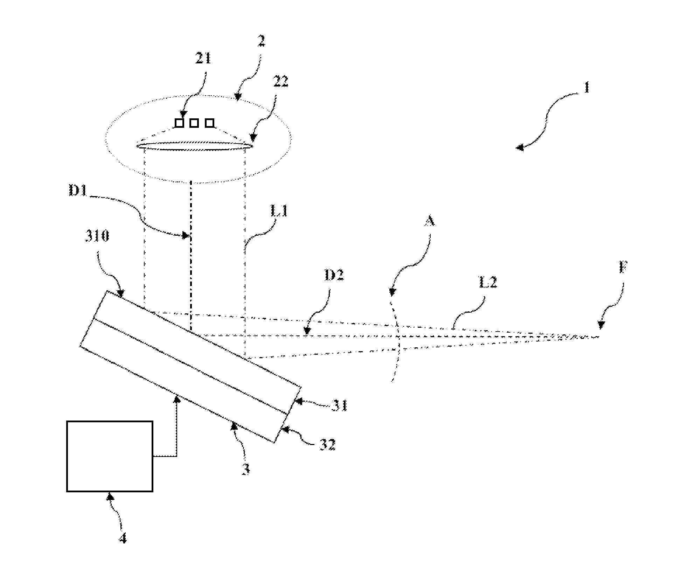

Preferably, however, the angle of incidence of the light L1 on the reflective surface 310 is quite lower than 90°, advantageously around 45°, as shown in Fig. 1.

According to the invention, the reflective element 3 comprises at least a first portion 31, which comprises the reflective surface 310, and at least a second portion 32, which is solidly coupled to the first portion 31.

With the term "solidly coupled", it is intended that the portions 31 and 32 are coupled so that mechanical stresses arising in the second portion 32 are transmitted to the first portion 31 with no appreciable dumping phenomena.

The lighting device 1 comprises also driving means 4 that are operatively associated with the second portion 32 of the reflective element 3.

The driving means 4 advantageously exert a driving action aimed at inducing a controlled structural deformation of the second portion 32.

The mechanical stresses generated by the deformation of the second portion 32 are transmitted to the first portion 31, which is in turn subject to a controlled structural deformation.

The deformation of the first portion 31 changes the shape of the reflective surface 310, which thus causes a variation of the spatial distribution of the light L2 reflected by the reflective surface 310.

Spatial distribution parameters, such that the position of the focus point F and/or the propagation direction D2 and/or the amplitude of the solid angle of reflection A, of the reflected light L2 are thus varied in response to the driving action performed by the driving means 4, and they can therefore be adjusted in a controlled manner.

Preferably, the reflective element 3 is a layered structure with a substantially planar geometry.

Each of the first and second portions 31 and 32 may thus include one or more layers of materials that can be superimposed with known industrial techniques.

Preferably, the first portion 31 comprises at least a layer 311 of light reflecting material, e.g. a metal layer.

The layer 311 may itself form the first portion 31 and it may be directly deposited on a surface of the second portion 32.

However, the first portion 31 may also comprise a substrate 312, for example made of glass or silicon dioxide, on which the layer 311 of light reflecting material is deposited.

The substrate 312 is advantageously bonded with or deposited on the active structure 32, preferably by means of suitable known machining techniques.

According to some embodiments of the present invention, the driving means 4 comprise a voltage generator 41 that is electrically coupled to the second portion 32.

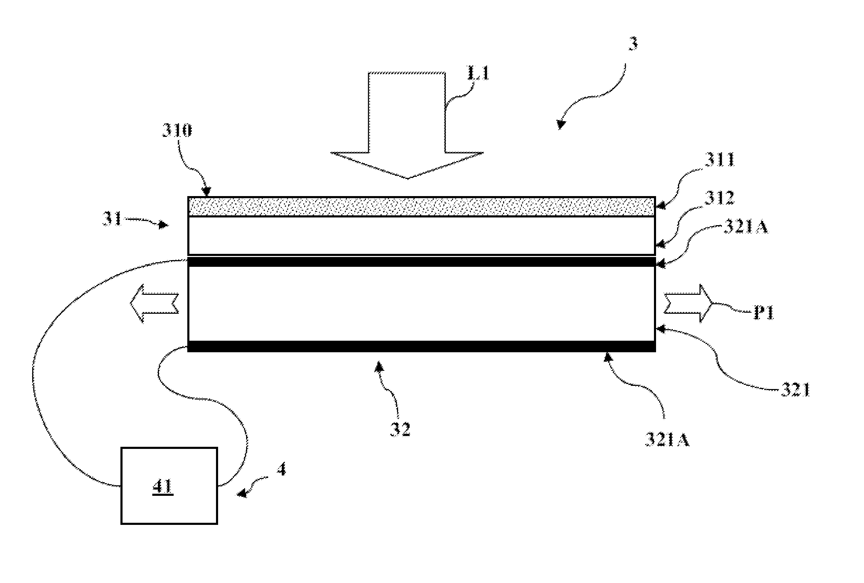

According to a first embodiment of the present invention (Fig. 2), the reflective element 3 may be advantageously structured similarly to a bimorph mirror.

In this case, the second portion 32 advantageously comprises at least a layer 321 of piezoelectric material and/or electrostrictive material.

Lead Zirconate Titanate (PZT) materials or polymers such as Vinylidene Fluoride Polymers may be advantageously used.

It is known that Vinylidene Fluoride Polymers exhibit piezoelectric, pyroelectric and photostrictive properties. The expression Vinylidene Fluoride Polymers is hereby used to denote polymers comprising recurring units derived from vinylidene fluoride, in an amount of advantageously at least 50 % by moles, with respect to all recurring units of the polymer, and possibly comprising recurring units derived from at least one other monomer polymerizable with vinylidene fluoride, including notably hexafluoropropylene (HFP), tetrafluoroethylene (TFE),
chlorotrifluoroethylene (CTFE), trifluoroethylene (TrFE).

The aforementioned properties are related to the crystalline structure of the Vinylidene Fluoride Polymers. VDF polymers exist, broadly speaking, in at least four different crystal phases : alpha (also referred to as Form II), beta (also referred to as Form I), gamma (also referred to as Form III) and delta (also referred to as Form IIp). The crystal forms can be transformed from one to another by application of heat, pressure, and/or electric fields. The most common form is the alpha-phase, which is the phase normally obtained upon crystallization from the melt. Piezoelectric properties are due primarily to the presence of the beta phase. Thus, to increase the piezoelectric and pyroelectric effect it is desirable to maximize the beta-phase content. Several processes for increasing the beta-phase content of Vinylidene Fluoride Polymers are known.

Such methods have generally comprised stretching, for example, a film of Vinylidene Fluoride Polymer at a temperature below the crystalline melting point of the polymer (e.g. about 170°-175° C for the homopolymer) and preferably below 100° C. Stretching of the film can take place by drawing or rolling the film by conventional techniques. The stretched polymer film can then be rendered piezoelectric by subjecting it to an electric field. Generally this is accomplished by placing electrodes on both sides of the stretched film and connecting them to an appropriate power supply. This step of rendering the film piezoelectric is generally referred to as "poling" or "polarizing". In this process the dipoles of the beta phase are oriented so that they are predominantly aligned with the field. Typical processes for stretching and polarizing Vinylidene Fluoride Polymer film to improve the piezoelectric and pyroelectric characteristics are described in U.S. Pat. Nos. 3,878,274, to Murayama et al. ; 4,241,128, to Wang ; 4,290,983, to Sasaki et al; 4,340,786 to Tester et al. ;
and 4,390,674, to Ward et al.

Without this substantially affecting targeted properties (piezoelectric, pyroelectric and photostrictive properties), it is nevertheless understood that weight averaged molecular weight of Vinylidene Fluoride Polymers typically ranges from 100-600 KDalton so as to ensure suitable processability.

Vinylidene Fluoride Polymers which have been found particularly useful as piezoelectric and/or pyroelectric materials are vinylidene fluoride (VDF) homopolymers (PVDF, herein below) and VDF copolymers comprising recurring units derived from trifluoroethylene (TrFE), possibly in combination with a third fluoromonomer different from VDF and TrFE (VDF-TrFE copolymers, herein below).

Said fluoromonomer can be HFP, TFE, CTFE, but is preferably CTFE.

VDF-TrFE copolymers are particularly preferred when photostrictive properties are required.

According to an embodiment, the VDF-TrFE copolymers is free from recurring units derived from said third fluoromonomer and typically consist essentially of :
- from 10 to 50 % by moles preferably from 15 to 40 % moles of recurring units derived from TrFE ; and
- from 50 to 90 % moles, preferably from 60 to 85 % moles of recurring units derived from VDF.
   According to a further embodiment of the invention, the VDF-TrFE copolymers consist essentially of recurring units derived from VDF, TrFE and CTFE. VDF-TrFE copolymers of this embodiment typically consist essentially of :
- from 15 to 40 % by moles, preferably from 20 to 35 % moles, more preferably from 20 to 25 % moles of recurring units derived from TrFE ; and
- from 55 to 76 % moles, preferably from 62 to 74 % moles, more preferably from 65 to 72 % moles of recurring units derived from VDF ; and
- from 5 to 16 % by moles, preferably from 6 to 12 % moles, more preferably from 8 to 10 % moles of recurring units derived from CTFE.

Vinylidene Fluoride Polymers suitable to the purposes of the present invention can be notably manufactured by certain emulsion polymerization processes, as described e.g. in EP0771823 (to Ausimont SpA), EP 0712882 (to Ausimont SpA) and EP2285845 (to Solvay Solexis SpA). A process particularly useful is a microemulsion polymerization process involving an organic radical initiator and comprising polymerizing in a reaction medium comprising a mixture of a (per)fluoropolyether oil and a surfactant, generally a fluorinated surfactant, e.g. a (per)fluoropolyether compound comprising one or more ionic end groups.

The VDF-TrFE copolymers which have been used for the manufacture of lighting devices according to the present invention are listed in the table herein below ; these copolymers, manufactured by microemulsion polymerization as above detailed possess a certain concentration of chain ends, due to back-biting and chain rearrangement phenomena during polymerization, which confer outstanding flexibility and resistance to mechanical solicitations in addition to required piezoelectric properties.

| Material | | A | B | c | D |
|---|---|---|---|---|---|
| VDF | %mol | 75.1 | 69.5 | 75.6 | 82.6 |
| TrFE | %mol | 24.9 | 30.5 | 24.4 | 174 |
| MFI | g/10' | 3.5 | 2.4 | 1.7 | 29.2 |
| Mn | /1000 | 128 | 136 | 143 | 106 |

| Chain ends in mmol/kg of polymer | | | | | |
|---|---|---|---|---|---|
| -CF₂H (a) | | 45 | 41 | 42 | 40 |
| -CF₂CH₃ (b) | | 26 | 21 | 31 | 31 |
| total (a) + (b) | | 71 | 62 | 73 | 71 |

| Chain ends in mmol/kg of VDF recurring units | | | | | |
|---|---|---|---|---|---|
| Total (a) + (b) | | 101 | 97 | 103 | 90 |

Films having thicknesses comprised between 15 and 30 µm have been manufactured by casting from solutions in methyl ethyl ketone starting from materials.

On the upper and lower surfaces of the layer 321, metal layers 321A are deposited and put in electrical connection with the voltage generator 41, which can thus apply a driving voltage through the layer 321.

Due to its piezoelectric and/or electrostrictive nature, the layer 321 structurally deforms upon the application of said driving voltage, preferably according to radial directions P1 that are substantially parallel to the main extension plane of the layer 321.

This deformation determines a consequent structural deformation of the layers of the first portion 31, which are solidly bonded with the second portion 32, thereby causing the shape deformation of the reflective surface 310.

This embodiment of the invention has remarkable advantages in terms of structural simplicity and ease of realization.

Aspect ratios relatively high (around 75) can be successfully adopted for the reflective element 3, which makes it simple to manufacture at industrial level, for example through known micromachining techniques.

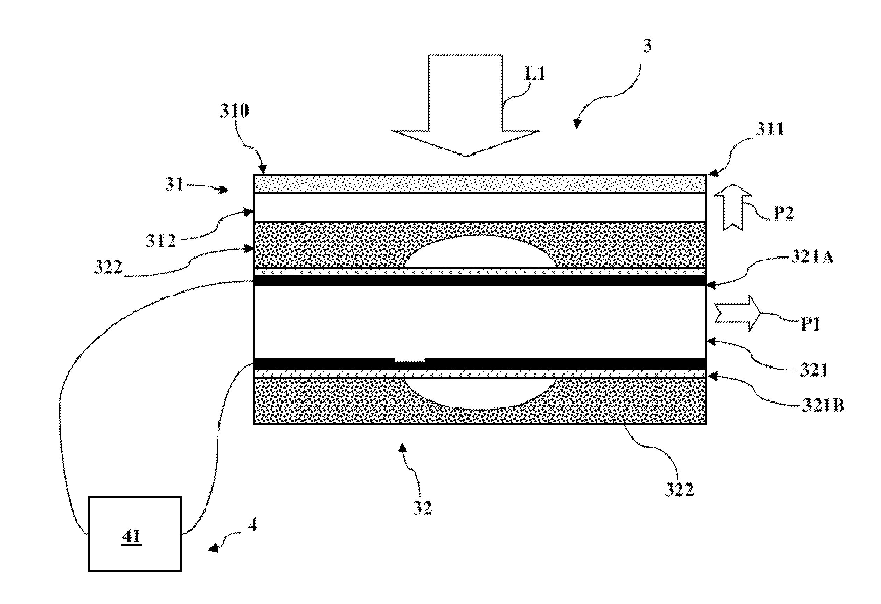

Fig. 3 shows a variant of the embodiment illustrated in Fig. 2.

In this case, the second portion 32 comprises a couple of cup-shaped layers 322, preferably of metallic material, between which the layer 321 of piezoelectric and/or electrostrictive material is positioned.

Suitable insulation layers 321B bond the cup-shaped layers 322 with the metallic layers 321A, which establish an electrical connection between the layer 321 and the voltage generator 41.

The deformation of the layer 321, following the application of a potential difference by the voltage generator 41, causes a structural deformation of the cup-shaped layers 322, which mainly occurs according to a direction P2 that is substantially perpendicular to the main extension plane of the layer 321.

The deformation of the cup-shaped layers 322 determines a corresponding deformation of the first portion 31 and, consequently, of the reflective surface 310.

The main advantage of this solution consists in that larger structural deformations of the passive layer 31 are obtained, since the cup-shape layers can induce relatively stronger mechanical stresses on the passive layer 31.

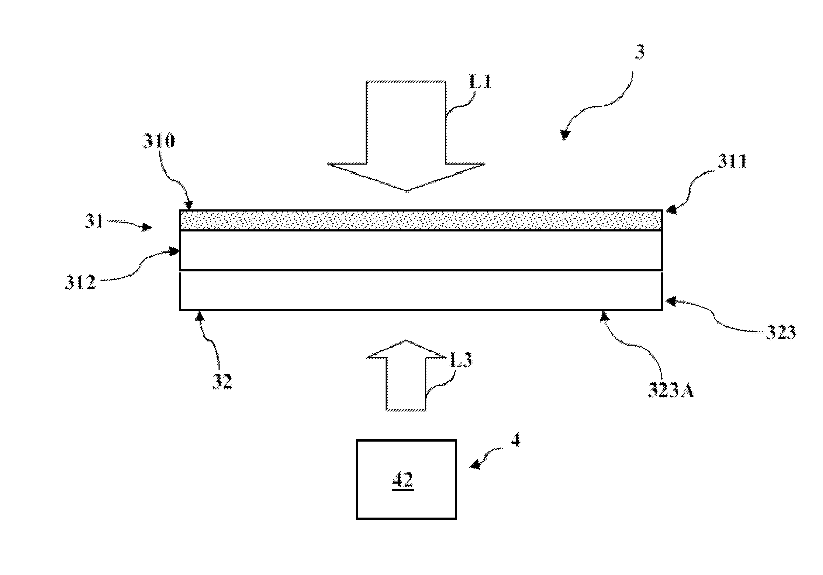

According to a further embodiment of the present invention (Fig. 4), the driving means 4 comprise a second light source 42 that is optically coupled to a first active surface 323A of the second portion 32, so that the active surface 323A receives the light L3 emitted by the light source 42.

The second portion 32 comprises at least a layer 323 of pyroelectric and piezoelectric material, comprising the active surface 323A. Vinylidene Fluoride Polymers, as above detailed, may be used, including PVDF (homopolymer) and VDF copolymers, e.g. VDF-TrFE copolymers.

When the active source 323A is illuminated by the light source 42, the photon adsorption determines the presence of temperature gradients on the layer 323.

Such temperature gradients cause voltage differences to arise across the layer 323, due to its pyroelectric nature.

Consequently, structural deformations of the layer 323 occur, given the piezoelectric behaviour of the layer 323 and a non-uniform thermal expansion at different regions of the layer 323.

The mechanical stresses so arisen are transmitted to the first portion 31 that is solidly bonded with the layer 323, thereby causing a deformation of the reflective surface 310.

As an alternative, the layer 323 may be of a photostrictive material. Polarized Lead Zirconium Titanate (PLZT) materials and polymers such as Vinylidene Fluoride Polymers, as above detailed, may be used.

When the active surface 323A is illuminated by the light source 42, the photon adsorption directly determines structural deformations of the layer 323, given its photostrictive behaviour.

The arisen mechanical stresses are transmitted to the first portion 31 that is solidly bonded with the layer 323, thereby causing a deformation of the reflective surface 310.

Both these solutions have the advantage that no driving voltages are needed to drive the second portion 32, which ensures a higher level of electric insulation for the lighting device 1.

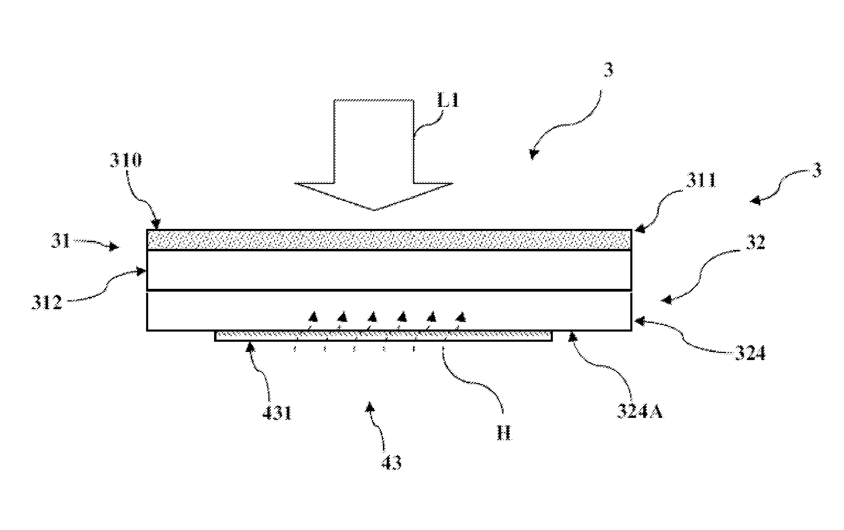

According to another embodiment of the present invention (Fig. 5), the driving means 4 comprise a heat source 43 that is thermally coupled to a second active surface 324A of the second portion 32, so that said active surface 324A receives the heat H generated by the heat source 43.

Similarly to the embodiment just described above, the second portion 32 comprises a layer 324 of piezoelectric and a pyroelectric material, such as, for example, Vinylidene Fluoride Polymer, as above detailed.

When the active surface 324A receives heat H from the heat source 43, voltage differences are established across the layer 324, due to its pyroelectric nature.

These voltage differences cause the arising of structural deformations in the layer 324, which behaves piezoelectrically.

The mechanical stresses so generated are transmitted to the first portion 31 that is solidly bonded with the layer 324, thereby causing a deformation of the reflective surface 310.

Preferably, the heat source 43 comprises at least a resistive electrode or layer 431 that is deposited on the second active surface 324A.

Also this solution has the advantage that no driving voltages are required to drive the second portion 32.

Further, such a solution allows to obtaining quite a compact structure for the lighting device 1, since the driving means 4 can be structurally integrated with the reflective element 3

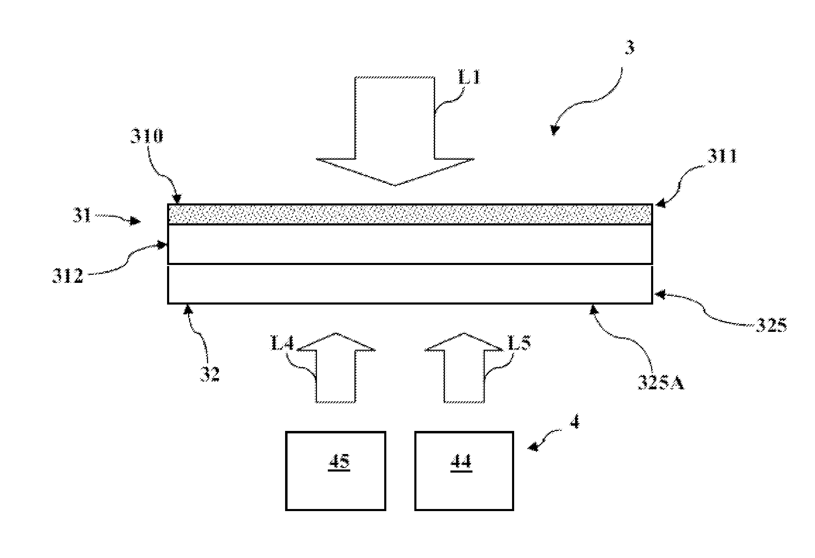

According to yet a further embodiment of the present invention (Fig. 6), the driving means 4 comprise a third light source 44 and a fourth light source 45 that are optically coupled to a third active surface 325A of the second portion 32, so that said active surface 325 receives the light emitted by said light sources.

The light sources 44 and 45 emit light with different wavelength and/or polarisation.

The active surface 32 comprises at least a layer 325 of photoisomeric material, which comprises the third active surface 325A.

Examples of possible photoisomeric materials are materials based on cis-trans isomers (e.g. azobenzene liquid crystals) or polymers containing photoreactive cinnamate molecules able to dimerize (e.g. cinnamic acid or cinnamylidene acetic acid groups), or materials based on ionization monomers like polymer chains of lecuo and spiropyran derivatives.

When the third active surface 325A receives light L5 from the third light source 44, the layer 325 undergoes to a first mechanical deformation.

When the third active surface 325A receives light L4 from the fourth light source 45, the layer 325 undergoes to a second mechanical deformation that reverses at least partially said first deformation.

The mechanical stresses generated during these structural transitions are transmitted to the first portion 31 that is solidly bonded with the layer 325, which deforms accordingly thereby causing a deformation of the reflective surface 310.

Further variants are possible for the lighting device, according to the invention.

According to some alternative embodiments (not shown), the reflective element 3 may not have a substantially planar geometry.

For example, the reflective element of the lighting device may be structured as a curved reflector (for example shaped as a toroid) that surrounds, at least partially, the first light source.

The first portion of the reflective element may comprise a curved film of light reflective material, which has an internal reflective surface that receives light from the first light source, while the second portion may comprise a plurality of ribs spaced one from the other and solidly bonded with an external surface of the reflector.

Driving means may be operatively associated with said ribs, so as to induce a deformation of them and consequently cause a deformation of the reflective surface of the first portion.

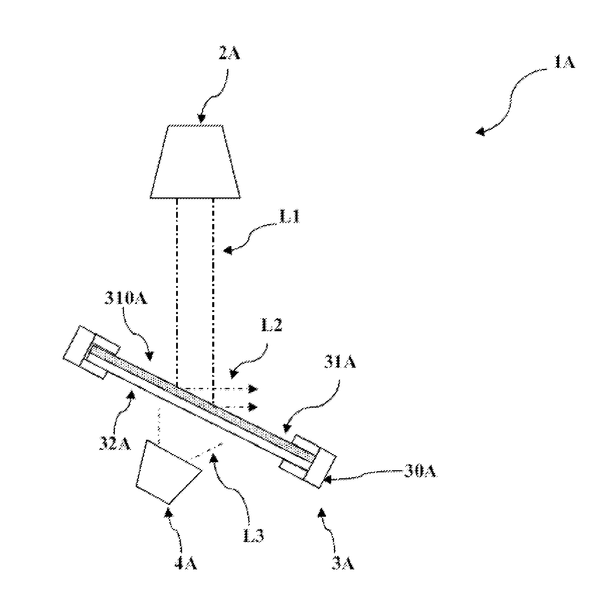

In Fig. 7, it is schematically shown the structure of a preferred example of a lighting device 1A according to the present invention.

A metallized film 31A (e.g. gold, aluminum or silver), which forms itself the first portion of the reflective element 3A, is bonded on a layer 32A of photostrictive material, such as Vinylidene Fluoride Polymers, as above detailed, and more particularly VDF-TrFE copolymers, as above detailed, which forms the second portion of the reflective element 3A.

VDF-TrFE copolymers represent a good active material, since their properties of pyroelectricity and piezoelectricity ensure a high bending of the metallized film 31 A.

The VDF-TrFE copolymers used in the embodiment exemplified in Fig. 7 have a TrFE molar content between 19 and 25 %.

The polymeric layer 32A can be obtained by a casting process starting from powder as raw material.

The casting process advantageously comprises in dissolving the Vinylidene Fluoride Polymers (e.g. available under the form of powder) in a suitable organic solvent (e.g. in Methyl Ethyl Ketone) ; solutions comprising an amount of 15 - 40 % w/w of polymer are typically used.

The solution so obtained is generally filtered for removing impurities and undissolved matter ; a 0,45 microns pore filter can be used to this aim. Filtration is generally carried out in an anhydrous nitrogen pressure filtration column.

The filtered solution is generally kept one hour in an ultra sound bath in order to remove possible residual bubbles of dissolved nitrogen or air.

The solution is generally poured on a clean and planar tempered glass substrate and cast by an automatic film caster at room temperature. Solvent can be then evaporated by submitting the solution coated glass substrate in a oven, generally under vacuum and at high temperature for a given time (e.g. under vacuum for 4 hours at 100°C).

After this treatment, the solvent is generally completely removed and a self-standing polymeric film can be easily peeled off the glass substrate.

The polymeric layer 32A is in the range of thickness of 15-30 µm and is then cut according to the needs.

The layer of metal material 31A is then deposited on one side of the layer 32A by a traditional deposition process.

According to this embodiment, Vinylidene Fluoride Polymer films made by casting from materials listed above as A, B, C, and D have been further coated with metal layers ; more particularly, by evaporation, gold layers having thickness of 50 nm or of 100 nm, or aluminum layers of 45 nm or of 100 nm have been assembled.

The reflective element 3A, which thus consists of a free standing metallized Vinylidene Fluoride Polymer foil, is kept optically flat by a frame 30A that is arranged so as to determine the arising of no mechanical stresses on the reflective element 3A, when the latter is on rest.

In the example of Fig. 7, an auxiliary LED light source 4A is used to illuminate a surface of the polymeric layer 32A layer in order to increase its temperature and cause the bending of the surface 310A of the metal layer 31A because of both thermal expansion and photostriction phenomena.

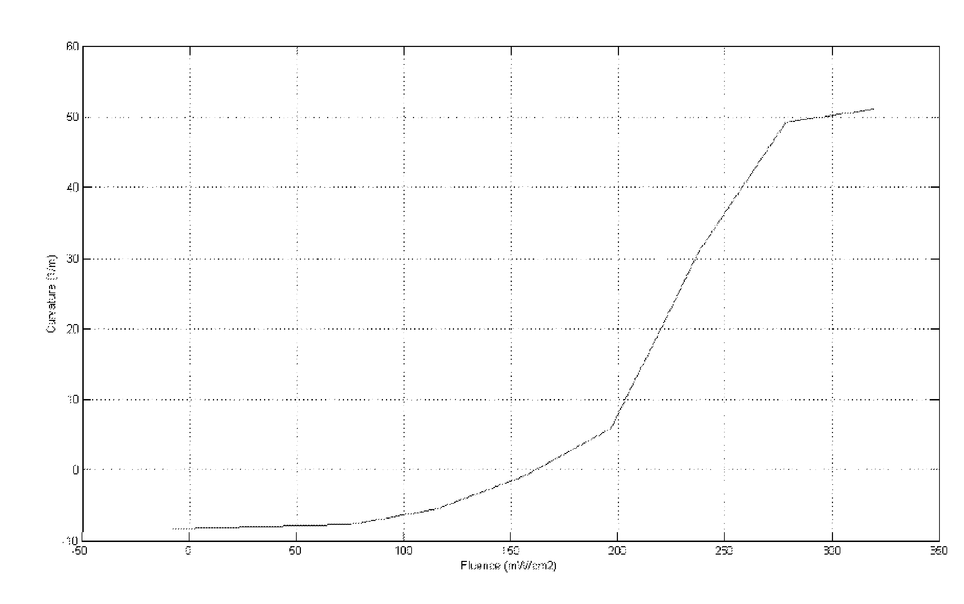

In Fig. 8, it is shown a diagram showing the radius of curvature of the metallic layer 31A as a function of the intensity of the light provided by the auxiliary LED light 4A.

As it is possible to notice, the curvature of the metallic layer 31A increases with the power provided by the auxiliary LED light 4A.

Experimental data has shown that with an electric power up to 1500mW provided to a single emitter LED light 4A, it is possible to bend the metallic layer 31A up to a radius of curvature of 20 cm.

The lighting device, according to the present invention, fully allows the achievement of the intended aims and objects.

In the lighting device, according to the invention, the distribution of the light emitted by the LED light source can be controlled without the mechanical movement of parts.

This ensures a high reliability of the light focus adjustment and a wide range of variation of the spatial distribution parameters of the emitted light.

The lighting device, according to the invention, has a very compact structure that ensures an easy integration in any kind of lighting apparatus.

The lighting device, according to the invention, has proven to be easy to manufacture at industrial level at competitive costs.

The lighting device, according to the invention, is suitable for use in various types of lighting apparatuses, such as, for example, in portable lights, lamps, lighting apparatuses for indoor and outdoor environments, automotive lighting apparatuses, aircraft lighting apparatuses, programmable light distribution apparatuses, and the like.

## Claims

1. A lighting device (1) **characterized in that** it comprises :
- a first light source (2) comprising one or more LED devices (21) ; and
- at least a deformable reflective element (3) that is optically coupled to said first light source to receive light from said first light source, said reflective structure comprising at least a first portion (31) having a reflective surface (310) that reflects at least partially the light (L1) received from said first light source, and a second portion (32) that is solidly coupled to said first portion; and
- driving means (4) that are operatively coupled to said second portion (32), said driving means inducing a structural deformation of said second portion, which in turn causes a deformation of the reflective surface (310) of said first portion, so that the spatial distribution of the light (L2) reflected by said reflective surface is varied.

2. A lighting device, according to claim 1, **characterised in that** said reflective element (3) has a layered structure.

3. A lighting device, according to one or more of the previous claims, **characterised in that** said first portion (31) comprises at least a layer (311) of light reflecting material.

4. A lighting device, according to claim 3, **characterised in that** said first portion (31) comprises a substrate (312), on which said layer (311) of light reflecting material is deposited or bonded.

5. A lighting device, according to one or more of the previous claims, **characterised in that** said driving means (4) comprise a voltage generator (41) that is electrically coupled to said second portion (32).

6. A lighting device, according to claim 5, **characterised in that** said second portion (32) comprises at least a layer (321) of piezoelectric material and/or electrostrictive material.

7. A lighting device, according to claim 6, **characterised in that** said second portion (32) comprises a couple of cup-shaped layers (322) of metallic material, between which said layer (321) of piezoelectric material and/or electrostrictive material is positioned.

8. A lighting device, according to one or more of the claims from 1 to 4, **characterised in that** said driving means (4) comprise a second light source (42) that is optically coupled to a first active surface (323A) of said second portion (32), so that said first active surface receives the light (L3) emitted by said second light source.

9. A lighting device, according to claim 8, **characterised in that** said second portion comprises at least a layer (323) of piezoelectric and pyroelectric material, which comprises said first active surface (323A).

10. A lighting device, according to claim 8, **characterised in that** said second portion comprises at least a layer (323) ofphotostrictive material, which comprises said first active surface (323A).

11. A lighting device, according to one or more of the claims from 1 to 4, **characterised in that** said driving means (4) comprise a heat source (43) that is thermally coupled to a second active surface (324A) of said second portion (32), so that said second active surface receives the heat (H) generated said heat source.

12. A lighting device, according to claim 11, **characterised in that** said second portion comprises at least a layer (324) of piezoelectric and pyroelectric material, which comprises said second active surface (324A).

13. A lighting device, according to one or more of the claims from 11 to 12, **characterised in that** said heat source (43) comprises at least a resistive electrode or resistive layer (431) that is deposited on said second active surface (324A).

14. A lighting device, according to one or more of the claims from 1 to 4, **characterised in that** said driving means (4) comprise a third light source (44) and a fourth light source (45) that are optically coupled to a third active surface (325A) of said second portion (32), so that said third active surface receives the light emitted by said third and fourth light sources, said third and fourth light sources emitting light with different wavelength and/or polarisation.

15. A lighting device, according to claim 14, **characterised in that** said second portion comprises at least a layer (325) of photoisomeric material, which comprises said third active surface (325A).
